Europäisches Patentamt

European Patent Office

Office européen des brevets

(11) Veröffentlichungsnummer: **0 261 306**
**A2**

## (12) EUROPÄISCHE PATENTANMELDUNG

(21) Anmeldenummer: **87106210.5**

(22) Anmeldetag: **29.04.87**

(51) Int. Cl.⁴: **H02K 9/06** , H02K 3/24

(30) Priorität: **26.09.86 DE 3632771**

(43) Veröffentlichungstag der Anmeldung:
**30.03.88 Patentblatt 88/13**

(84) Benannte Vertragsstaaten:
**CH DE FR GB IT LI**

(71) Anmelder: **Metabowerke GmbH & Co.**
**Gerberstrasse 31**
**D-7440 Nürtingen(DE)**

(72) Erfinder: **Schulz, Manfred, Dipl.-Ing.**
**Hafner Str. 11**
**D-7440 Nürtingen(DE)**
Erfinder: **Wagemann, Alfred**
**Sudetenstrasse 138**
**D-7440 Nürtingen(DE)**
Erfinder: **Waldner, Gerhard**
**Lembergweg 13**
**D-7441 Neckarhausen(DE)**

(74) Vertreter: **Patentanwälte Dipl.-Ing. Bodo**
**Thielking Dipl.-Ing. Otto Elbertzhagen**
**Gadderbaumer Strasse 20**
**D-4800 Bielefeld 1(DE)**

(54) **Anker für durchzugsbelüftete Elektromotoren.**

(57) Ein solcher Anker für schnellaufende, durchzugsbelüftete Elektromotoren, insbesondere für den Einsatz in Elektrowerkzeugen, hat eine aus einer Vielzahl von Drahtwindungen gebildete Wicklung, die in Längsnuten (4) eines auf einer Welle sitzenden Eisenpakets (3) angeordnet ist und an dessen beiden Stirnenden je einen axial vorstehenden Wickelkopf (7, 8) bildet. Es soll nun mit einfachen Mitteln ein wirkungsvoller Schutz der Ankerwicklung gegen Aufschläge von im Kühlluftstrom mitgeführten festen Partikeln erreicht werden, ohne daß die Kühlung des Ankers wesentlich beeinträchtigt wird. Dazu sind zumindest auf einem der beiden Wickelköpfe darüber erhaben vorstehende Rippen in Abstand voneinander angeordnet, die sich entlang von Mantellinien in Ankerlängsrichtung oder zumindest im wesentlichen in dieser Richtung erstrecken und zwischen denen freiliegende Stellen des Wickelkopfes sich befinden.

Fig.1

Xerox Copy Centre

## Anker für durchzugsbelüftete Elektromotoren

Die Erfindung bezieht sich auf einen Anker für schnellaufende, durchzugsbelüftete Elektromotoren, insbesondere für den Einsatz in Elektrowerkzeugen, mit einer aus einer Vielzahl von Drahtwindung gebildeten Wicklung, die in Längsnuten eines auf einer Welle sitzenden Eisenpakets angeordnet ist und an dessen beiden Stirnenden je einen axial vorstehenden Wickelkopf bildet.

Solche Anker, bei denen es sich genau genommen um den Rotor des Elektromotors handelt, auf dessen Welle in der Regel ein Abtriebsritzel sitzt, sind bei Durchzugsbelüftung des Motors erheblichen Beanspruchungen durch Aufprallen von im Kühlluftstrom mitgeführten, festen Partikeln ausgesetzt. Insbesondere bei stauberzeugenden Elektrowerkzeugen, wie Steinbohrmaschinen, Hämmern, Schleifgeräten und dergleichen, werden von der Kühlluft erhebliche Mengen an Staub-und Schmutzpartikeln durch die Maschine hindurchbefördert. Diese Partikel treffen mit einer erheblichen Relativgeschwindigkeit auf die Wickelköpfe der Ankerwicklung auf, weil sich zu der Strömungsgeschwindigkeit auch noch eine Geschwindigkeitskomponente addiert, die auf die Rotation des Ankers zurückzuführen ist. Dabei ist zu berücksichtigen, daß die Ankerrotoren von Universalmotoren, wie sie heute generell in Elektrowerkzeugen zum Einsatz kommen, nicht nur Leerlauf-sondern auch Arbeitsdrehzahlen in der Größenordnung von weit mehr als 10 000 min⁻¹ haben.

Zum Schutz der Ankerwicklungen ist es bekannt, insbesondere auf die Wickelköpfe einen Schutzlack aufzubringen. Trotzdem kommen Beschädigungen der Ankerwicklung vor, indem der Schutzlack aberodiert oder durchschlagen wird, wobei es dann nach weiterer Zerstörung der Isolierlackschicht auf den Wicklungsdrähten zu Windungs-oder Wicklungskurzschlüssen kommt. Man hat deshalb weiter schon die Ankerwicklung vollständig in eine Vergußmasse eingebettet. Zwar ist damit die Wicklung vor mechanischen Einwirkungen weitestgehend geschützt, jedoch wird die Wärmeabfuhr des Ankerrotors wesentlich verschlechtert, so daß die nutzbare Leistung des Elektromotors mit einem derart geschützten Rotor unbefriedigend ist. Ferner hat man auch schon zum besonderen Schutz die freiliegenden Teile der Ankerwicklung mit Isolierband oder einer Schnur umwickelt, diese Lösung ist jedoch sehr arbeitsintensiv und damit teuer.

Aus dem DE-U-17 97 835 ist ein korbartiger Nutenschließer für Anker von Elektromotoren bekannt, der axial gerichtete Nutenverschlußkeile besitzt. An der Austrittstelle aus den Nuten befinden sich Öffnungen zwischen den Nutenverschlußkeilen, die im übrigen in einen glattflächigen, vollkommen geschlossenen Korb übergehen. Die erwähnten Öffnungen dienen dazu, einen Tränklack zum Imprägnieren der Ankerwicklung einbringen zu können. Auch bei dieser Ausführung treten die - schon geschilderten Nachteile auf, daß nämlich die Wärmeabfuhr vom Ankerrotor stark beeinträchigt und damit die nutzbare Leistung des Elektromotors verschlechtert ist.

Aus der GB-965,984 und der FR-1.490.764 sind Halter aus Flachmaterial zur Stützung der Wickelkopfform vornehmlich an Statorwicklungen bekannt, die keine Schutzfunktion haben. Insbesondere ist dort das Hauptproblem durchzugsbelüfteter Elektromotoren gar nicht angesprochen, nämlich den Ankerrotor durch Bespülen mittels der durchziehenden Luft ausreichend zu kühlen.

Der Erfindung liegt nun die Aufgabe zugrunde, einen Anker für solche durchzugsbelüfteten Elektromotoren der gattungsgemäßen Art zu schaffen, bei dem mit einfachen Mitteln ein wirkungsvoller Schutz der Ankerwicklung gegen Aufschläge von im Kühlluftstrom mitgeführten, festen Partikeln erreicht ist, ohne daß die Kühlung des Ankers wesentlich beeinträchtigt wird.

Dazu sind bei einem gattungsgemäßen Anker für schnellaufende, durchzugsbelüftete Elektromotoren zumindest auf einem der beiden Wickelköpfe darüber erhaben vorstehende Rippen in Abstand voneinander angeordnet, die sich entlang von Mantellinien in Ankerlängsrichtung oder zumindest im wesentlichen in dieser Richtung erstrecken und zwischen denen freiliegende Stellen des Wickelkopfes sich befinden.

Der besondere Vorteil eines erfindungsgemäßen Ankers für Elektromotoren liegt darin, daß die auf den Wickelkopf aufgebrachten, vorstehenden Rippen als Abweiser fungieren, was sich aus dem dynamischen Zustand aufgrund der hohen Ankerdrehzahlen und nicht aus der Überdeckung bzw. Abschattung des betreffenden Wickelkopfes durch die darauf befindlichen Rippen ergibt. Nur dadurch können die Rippen einen solchen Abstand voneinander haben, daß zwischen ihnen eine ausreichende Kühlfläche am Wickelkopf freibleibt, die von der Kühlluft bespült werden kann, aus der die festen Partikel aufgrund der Mitnahme durch die Rippen eliminiert sind. Praktische Versuche haben die Wirksamkeit der Außenverrippung an den Ankerwickelköpfen als Abweisevorrichtung für die im Kühlluftstrom mitgeführten Partikel bestätigt. Dagegen sind die tatsächlichen Strömungsverhältnisse in Ankernähe aufgrund der auf die Wickelköpfe aufgesetzten Verrippungen noch nicht restlos erforscht. Es ist allerdings davon auszugehen, daß die den Anker vorwiegend in axialer Richtung überströmende Kühlluft auch die Öffnungen zwischen den auf die Wickelköpfe aufgesetzten Rippen durchflutet, weil im Innern des Motors keine laminaren Strömungsverhältnisse herrschen, sondern sich ein mehr oder weniger verwirbelter Luftfluß ausbildet. Wenn sich nun die relativ - schweren und trägen Feststoffpartikel in Richtung auf den Wicklungskopf zubewegen, werden sie von den darauf vorstehenden Rippen erfaßt und radial weggeschleudert, bevor sie auf die freiliegenden Wickelkopfteile auftreffen können. Aufgrund der sehr hohen Ankerdrehzahlen von weit über 10 000 min$^{-1}$ dauert es nämlich nur wenige Millisekunden, bis sich die Verrippung auf dem Wickelkopf jeweils um eine Teilung weiterbewegt hat.

Die Abweiser-Rippen werden zumindest auf den von den Feststoffpartikeln stärker beaufschlagten Wickelkopf, vorzugsweise jedoch auf beide Wickelköpfe des Ankers aufgebracht. Sie sind als Teile eines auf die Wickelköpfe aufsetzbaren Käfigs leicht zu fertigen und anzubringen, wobei je nach der üblichen Ausbildung der Wickelköpfe für Anker von Kollektormotoren ein solcher Käfig etwas kegelstumpfförmig oder kugelabschnittförmig ausgebildet ist. Eine exakte Anpassung des Käfigs an die Unregelmäßigkeiten der Wicklungen, die zudem noch für verschiedene Spannungen unterschiedlich ausfallen, ist in der Regel nicht möglich und vor allem auch nicht erforderlich für die wichtige Abweiserfunktion. Der aufgesetzte Käfig ist mit dem betreffenden Wickelkopf vorzugsweise über ein Schutzmedium, wie ein Träufelharz, drehfest verbunden. Damit der Käfig weder elektrisch noch magnetisch störend wirkt, besteht er zweckmäßig aus einem Isolierwerkstoff. Um eine ausreichende Wärmeabfuhr vom Rotoranker des Elektromotors nicht zu beeinträchtigen, wählt man vorteilhaft die Gesamtfläche der zwischen den Käfigstegen vorhandenen Öffnungen gleich groß oder größer als die von den Käfigstegen selbst überdeckte Fläche. Somit ist der rein mechanische Schutz durch die Käfigstege infolge Abdeckung von Wickelkopfteilen so gut wie vernachlässigbar.

Weitere vorteilhafte Ausgestaltungsmerkmale der Erfindung wird nachfolgend anhand der Zeichnung an einem Ausführungsbeispiel näher erläutert. Dabei zeigen:

Fig. 1 die Ansicht eines Rotorankers eines durchzugsbelüfteten Universalmotors für ein Elektrowerkzeug,

Fig. 2 die Draufsicht auf einen Ver rippungskäfig für einen der Wickelköpfe des Ankerrotors nach Fig. 1,

Fig. 3 eine geschnittene Seitansicht des Verrippungskäfigs nach Fig. 2 und

Fig. 4 eine geschnittene Seitansicht eines Verrippungskäfigs anderer Ausführung für die Abdeckung des zweiten Wickelkopfes des Rotorankers nach Fig. 1.

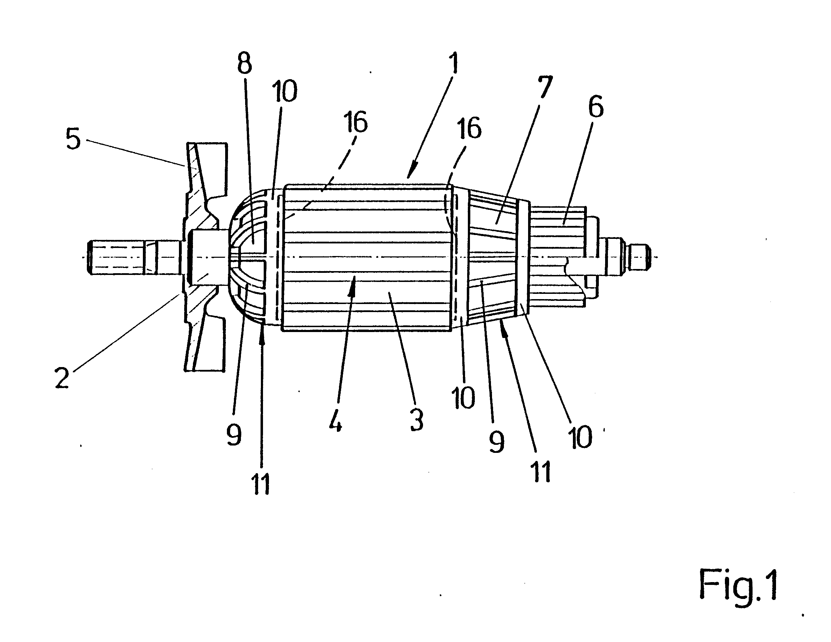

Figur 1 zeigt einen Rotoranker 1, der ein auf einer Ankerwelle 2 sitzendes Eisenpaket 3 hat, das im wesentlichen zylindrisch ist. Das Eisenpaket 3 besitzt Längsnuten 4, in die eine in der Zeichnung nicht näher erkennbare Wicklung aus Drahtwindungen mit Lackisolierung eingebettet ist. Auf der Abströmseite des Ankers ist auf der Ankerwelle 2 ferner ein radial wirkender Lüfter 5 angeordnet, während auf der gegenüberliegenden Ankerseite auf der Welle 2 ein Kollektor 6 sitzt. Zwischen dem Kollektor 6 und dem Eisenpaket 3 erstreckt sich ein erster anströmseitig liegender Wickelkopf 7, der aus den zwischen den Nuten 4 des Eisenpakets 3 sich schließenden Windungsabschnitten und aus den zu dem Kollektor 6 hingeführten Drahtabschnitten gebildet wird. Im wesentlichen hat hier der Wickelkopf 7 die Gestalt eines Kgelstumpfes oder -abschnittes.

An der gegenüberliegenden Ankerseite befindet sich ein weiterer Wickelkopf 8, der durch die Windungsabschnitte gebildet wird, welche hier stirnseitig aus den Nuten 4 des Eisenpakets 3 heraus und in andere Nuten wieder eintreten. Im wesentlichen ergibt sich hier eine Umhüllende des Wickelkopfes 8 in Gestalt eines Kugelabschnittes, der zum Ende hin etwas abgeflacht ist.

Auf beide Wickelköpfe 7 und 8 sind Rippen 9 aufgebracht, die sich im wesentlichen entlang von äußeren Mantellinien der Wickelköpfe 7, 8 in Ankerlängsrichtung erstrecken. Die Rippen 9 stehen an den Außenseiten der Wickelköpfe 7, 8 in radialer Richtung vor und erstrecken sich jeweils zwischen zwei Ringstegen 10, mit denen sie einen einstückigen Käfig 11 bilden. Im wesentlichen haben die Rippen 9 einen rechteckigen Querschnitt, und sie sind damit hochkant zur Wickelkopfoberseite angeordnet.

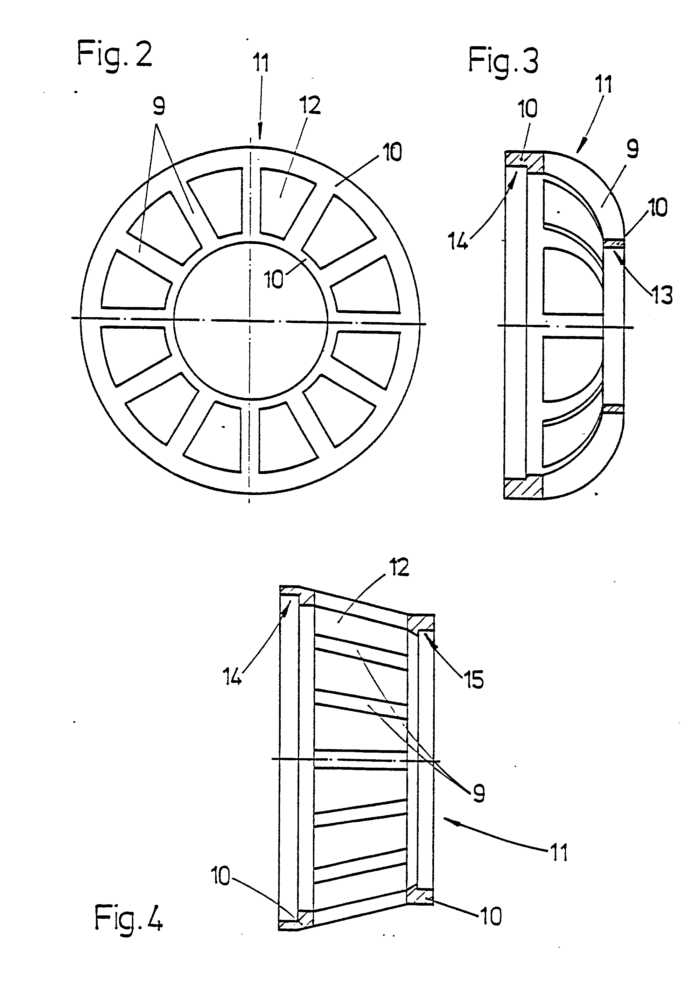

Eine erste Ausführungsform eines solchen Käfigs 11, der für die Abdeckung des lüfterseitigen Wickelkopfes 8 dient, ist in den Figuren 2 und 3 in Einzelheiten dargestellt. Seine Form in Gestalt eines kreisbogenförmigen oder parabolischen Rotationskörpers ist an die des Wickelkopfes 8 (Fig. 1) derart angepaßt, daß die Außenkontur des Wickelkopfes 8 im wesentlichen formschlüssig in das Innere des korbartigen Käfigs 11 hineinpaßt. Die einzelnen, die Rippen 9 bildenden Stege des Käfigs 11 sind in Abstand voneinander angeordnet, so daß dazwischen Öffnungen 12 gebildet sind. Im Bereich dieser Öffnungen 12 liegen die darunter angeordneten Abschnitte des Wickelkopfes 8 frei, so daß trotz teilweiser Abdeckung noch eine ausreichende Kühlfläche des Wickelkopfes zur Verfügung steht. Deshalb ist die Gesamtfläche der Öffnungen 12 des Käfigs 11 gleich groß oder größer als die von den Rippenstegen 9 und Ringstegen 10 des Käfigs 11 überdeckte Fläche. Der kleinere, außen liegende Ringsteg 10, in den die Rippen 9 radial einmünden, besitzt innenseitig eine Bohrung 13, die mit dem betreffenden Abschnitt in der Nachbarschaft des Lüfters 5 der Ankerwelle 1 eine Passung bildet, damit zur Vermeidung von Unwuchten der Käfig 11 in der Betriebslage exakt zentriert ist. Der Ring 10 am gegenüberliegenden Ende des Käfigs 11, in den die Rippen 9 in etwa achsparallel einmünden, besitzt eine Innenaussparung 14, mit der der montierte Käfig 11 auf eine in Figur 1 erkennbare Endscheibe 16 an der Stirnseite des Eisenpakets 3 aufgeschoben ist.

Figur 4 zeigt einen Käfig 11, der in gleicher Weise wie der nach den Figuren 2 und 3 aus zwischen zwei Ringstegen 10 sich erstreckenden Rippenstegen 9 besteht. Auch hier werden in ähnlicher Weise die in Ankerumfangsrichtung in der Betriebsstellung verlaufenden Ringstege 10 durch Zwischen-oder Endscheiben 16 in koaxialer Lage fixiert, damit sich keine Unwuchten ergeben. Der hier in etwa kegelstumpfförmig ausgebildete Käfig 11 ist an den in Figur 1 ersichtlichen kollektorseitigen Wickelkopf 7 des Ankers angepaßt. Im Innern seiner Ringstege 10 besitzt er Innenaussparungen 14 und 15, welche die erwähnten, zentrisch auf der Ankerwelle 2 sitzenden Scheiben übergreifen.

Damit die Käfige 11 ihre Aufgabe erfüllen können, müssen sie drehfest am Anker 1 fixiert sein. Dies erreicht man auf besonders einfache Weise dadurch, daß man ein Träufelharz zur Lagefixierung der Windungen der Ankerwicklung mit oder nach dem Aufsetzen der Käfige 11 auf die Ankerwicklung und damit auf die Wickelköpfe 7 und 8 aufbringt. Dadurch werden die Käfige 11 auf den Wickelköpfen 7 und 8 festgeklebt und zusätzlich durch geringen Formschluß gesichert.

Anders als in der Zeichnung dargestellt, kann der Käfig 11 auch die Gestalt eines Korbes mit unregelmäßig verlaufenden Stegen und unregelmäßig dazwischen angeordneten Öffnungen haben. Wichtig dabei ist lediglich, daß die Stege nicht sämtlich in Umfangsrichtung verlaufen sondern eine solche Richtung haben, die eine deutliche Komponente in Achsrichtung des Ankers besitzt, damit die angestrebte Abweisung der im Kühlluftstrom mitgeführten Feststoffpartikel erfolgen kann. Zusätzlich kann der Käfig oder Korb aus Festigkeitsgründen auch Stege aufweisen, die diesem Erfordernis nicht genügen.

**Ansprüche**

1. Anker für schnellaufende, durchzugsbelüftete Elektromotoren, insbesondere für den Einsatz in Elektrowerkzeugen, mit einer aus einer Vielzahl von Drahtwindungen gebildeten Wicklung, die in Längsnuten (4) eines auf einer Welle sitzenden Eisenpakets (3) angeordnet ist und an dessen beiden Stirnenden je einen axial vorstehenden Wickelkopf (7, 8) bildet,
dadurch gekennzeichnet, daß zumindest auf einem der beiden Wickelköpfe (7) darüber erhaben vorstehende Rippen (9) in Abstand voneinander angeordnet sind, die sich entlang von Mantellinien in Ankerlängsrichtung oder zumindest im wesentlichen in dieser Richtung erstrecken und zwischen denen freiliegende Stellen des Wickelkopfs (7) sich befinden.

2. Anker nach Anspruch 1,
dadurch gekennzeichnet, daß die Rippen (9) Stege eines auf den oder die Wickelköpfe (7, 8) aufgesetzten Käfigs (11) sind.

3. Anker nach Anspruch 2,
dadurch gekennzeichnet, daß der Käfig (11) in Ankerumfangsrichtung angeordnete Ringstege (10) hat, zwischen denen sich die Rippenstege (9) erstrecken.

4. Anker nach Anspruch 2,
dadurch gekennzeichnet, daß der Käfig (11) nach Art eines Korbes unregelmäßig angeordnete Stege und dazwischen unregelmäßige Öffnungen hat, wobei zumindest ein Teil der Stege sich annähernd in Ankerlängsrichtung erstreckt.

5. Anker nach einem der Ansprüche 2 bis 4,
dadurch gekennzeichnet, daß die Gesamtfläche der zwischen den Stegen (9, 10) vorhandenen Öffnungen (12) des Käfigs (11) gleich groß oder größer als die von den Käfigstegen (9, 10) überdeckte Fläche ist.

6. Anker nach einem der Ansprüche 3 bis 5,
dadurch gekennzeichnet, daß zumindest einer der Ringstege (10) des Käfigs (11) eine Zentrierpassung (13 - 15) hat.

7. Anker nach Anspruch 6,
dadurch gekennzeichnet, daß die Zentrierpassung eine auf der Ankerwelle (2) sitzende Bohrung (13) des Ringstegs (10) ist.

8. Anker nach Anspruch 6,
dadurch gekennzeichnet, daß die Zentrierpassung eine über eine am Stirnende des Eisenpakets (3) angeordnete Endscheibe (16) greifende Innenaussparung (14) des Ringsteges (10) ist.

9. Anker nach einem der Ansprüche 2 bis 8,
dadurch gekennzeichnet, daß der Käfig (11) mittels eines zumindest auf den Wickelkopf (7, 8) aufgebrachten Schutzmediums, wie eines Träufelharzes, fixiert ist.

10. Anker nach einem der Ansprüche 2 bis 9, dadurch gekennzeichnet, daß der Käfig (11) aus einem Isolierwerkstoff besteht.

Fig.1

Fig. 2

Fig. 3

Fig. 4